# EUROPÄISCHE PATENTSCHRIFT

(11) **EP 0 792 674 B1**
(45) Veröffentlichungstag und Bekanntmachung des Hinweises auf die Patenterteilung: **01.09.1999**
(21) Anmeldenummer: 97101745.4
(22) Anmeldetag: 05.02.1997
(51) Int. Cl.: B01D 29/00, E03B 1/04, C02F 1/00

(54) **Brauchwasseranlage zur Mehrfachnutzung von Trinkwasser**
Sanitary installation for the multiple use of drinking water
L'installation d'eau sanitaire pour l'utilisation multiple de l'eau potable

(30) Priorität: 22.02.1996 DE 19606577
(43) Veröffentlichungstag der Anmeldung: 03.09.1997
(73) Patentinhaber: Grosse-Plankermann, Andreas, 96050 Bamberg (DE)
(72) Erfinder: Grosse-Plankermann, Andreas, 96050 Bamberg (DE)

(56) Entgegenhaltungen:
- WO-A-95/29299
- DE-C- 4 323 990
- US-A- 5 403 498

## Beschreibung

Die vorliegende Erfindung betrifft eine Brauchwasseranlage, die insbesondere zur Mehrfachnutzung von Trinkwasser in privaten Haushalten verwendbar ist. Ein Einsatz ist sowohl in Ein- als auch Mehrfamilienhäusern möglich. In erster Linie kommen als Einsatzgebiet Neubauten in Betracht, jedoch ist eine nachträgliche Installation auch in Altbauten technisch möglich.

Verfahren zur Reduzierung des Trinkwasserverbrauchs in privaten Haushalten sind bekannt, wie z.B. Regenwassernutzungsanlagen. Hierbei wird das benötigte Trinkwasser teilweise durch Regenwasser ersetzt. Das von der Dachfläche abfließende Regenwasser, wird in Zisternen oder in Kellern installierten Sammelbehältern aufgefangen, und zur Gartenbewässerung, für die Toilettenspülung oder auch vereinzelt für die Waschmaschine verwendet. Nachteil einer solchen Regenwassemutzungsanlage ist der diskontinuierliche Zulauf und die damit verbundenen relativ hohen Investitionskosten. Aufgrund der schwankenden Niederschlagsmengen müssen die eingesetzten Sammelbehälter eine relativ große Speicherkapazität besitzen, die ca. 50% der Investitionskosten für eine solche Anlage betragen. Ein Einsatz einer solchen Anlage kommt nur für Einfamilienhäuser in Betracht, da ansonsten das benötigte Speichervolumen und der damit verbundene Platzbedarf nicht mehr bereitzustellen wären. Ferner ist auzumerken, daß in einzelnen Gemeinden und Kommunen die Abwasserabgaben nicht mit dem Trinkwasserverbrauch gekoppelt sind, sondern separat verrechnet werden. Ist dies der Fall, reduziert sich die Einsparung bei Regenwassernutzungsanlagen um die Hälfte, da die Abwassermenge konstant bleibt. Bei einer Brauchwasseranlage, die das Dusch- bzw. Badewasser zur Toilettenspülung nutzt, auch Grauwasseranlage genannt, kommt es, im Vergleich zu Regenwassernutzungsanlagen, zu kurzen Verweilzeiten des Brauchwassers im Speichertank, da die zufließende Wassermenge pro Tag statistisch in etwa der zur Toilettenspülung benötigten Wassermenge pro Tag entspricht, so daß der Speichertank nur ein geringes Speichervolumen benötigt. Dadurch reduzieren sich bei einer Grauwasseranlage, im Vergleich zu Regenwassernutzungsanlagen, sowohl die Investitionskosten als auch der benötigte Platzbedarf. Ferner reduziert sich die Abwassermenge.

Verfahren und Vorrichtungen zur Nutzung von Grauwasser sind bekannt (US 5 403 498 bzw. WO 95 29299), wobei die Grauwassernutzungsanlagen mit Reinigungs- und Kontrollsystemen zur Wiederverwendung des Grauwassers versehen sind.

Das Problem einer Grau- bzw. Brauchwasseranlage ist die notwendige Aufbereitung des zufließenden Dusch- bzw. Badewassers, um eine Nutzung des Grau- bzw. Brauchwassers zur Toilettenspülung zu ermöglichen. Hierbei ist es notwendig, möglichst alle sich im Dusch- bzw.- Badewasser befindlichen Feststoffe vorher zu entfernen.

Aufgabe der Erfindung ist es insbesondere, eine Grau- bzw. Brauchwasseranlage zur Verfügung zu stellen, die es ermöglicht das Dusch- bzw. Badewasser so aufzubereiten, daß es zur Toilettenspülung genutzt werden kann. Diese Aufgabe wird erfindungsgemäß gelöst durch eine Brauchwasseranlage, umfassend einen Zwischenbehälter für die Aufbereitung des Brauchwassers, der einerseits an eine Zuführungsleitung zum Zuführen des aufzubereitenden Brauchwassers und andererseits an eine Abführungsleitung zum Abführen des aufbereiteten Brauchwassers angeschlossen ist. Der Zwischenbehälter ist mit einem Filter zwischen der Zuführungs- und Abführungsleitung versehen, dessen Filterfläche so angeordnet und bemessen ist, daß beim Zuströmen einer vorbestimmten maximalen Brauchwassermenge pro Zeiteinheit zu dem Filter nur ein Bruchteil der Filterfläche durchströmt wird.

Die vorstehenden sowie weitere Ziele, Vorteile und Merkmale der Erfindung werden nachfolgend unter Bezugnahme auf die Figuren der Zeichnung näher beschrieben und erläutert; es zeigen:
- Fig. 1: eine im wesentlichen im Querschnitt dargestellte besonders bevorzugte Ausführungsform einer erfindungsgemäßen Brauchwasseranlage;
- Fig. 2: eine vergrößerte Detailansicht des in der Brauchwasseranlage der Fig.1 vorgesehenen Zwischenbehälters mit Filter;
- Fig. 3: eine Aufsicht von oben aufden Zwischenbehälter ohne Filter gemäß Fig.2;
- Fig. 4, 5 und 6: Veranschaulichungen des Zwischenbehälters mit Filter gemäß Fig.1 und Fig. 2 in verschiedenen Stadien der Filterzusetzung mit Verunreinigungen;
- Fig. 7 und 8: im Querschnitt dargestellte zweier theoretisch möglicher jedoch nicht bevorzugter Ausführungsformem eines Zwischenbehälters zur Vorfiltration des aufzubereitenden Brauchwassers;
- Fig. 9: eine im wesentlichen im Querschnitt dargestellte mehr bevorzugte Ausführungsform einer erfindungsgemäßen Brauchwasseranlage gemäß Fig 1;

Das Brauchwasser fließt aufgrund der Schwerkraft über ein separates Fallrohr 1, beispielsweise von den Dusch- bzw. Badewannenausläufen, über eine Zuführungsleitung 7 in den Zwischenbehälter 6 der Brauchwasseranlage. Der hierbei durchflossene, demontierbare Siphon 4 dient zur Sedimentation eventuell mitgeführter grobkörniger Schmutzstoffe (wie z.B.: Sand etc.). Der Zwischenbehälter 6 ist als Vortilter für das Brauchwasser konzipiert und wird weiter unten detaillierter beschrieben. Über die Abführungsleitung 17 gelangt das Brauchwasser in den Speichertank 18. An der Entnahmeöffnung 19 ist die Saugseite der Brauchwasserpumpe 21 angeschlossen. Der vorgeschaltete Feinfilter 20 dient lediglich zum Schutz der Brauchwasserpumpe 21 im Falle einer eventuellen Fehlfunktion der Anlage, da die eigentliche Filtration in dem Zwischenbehälter 6 erfolgt. Die Steuerung der Brauchwasserpumpe 21 erfolgt mittels Druckschalter, so daß bei Druckabfall in der separaten Steigleitung 22 zu den Toilettenspülkästen die Pumpe fördert, bis sich der Haltedruck von etwa 4 bar wieder eingestellt hat.
Im Falle eines zu niedrigen Brauchwasserspiegels im Speichertank 18 wird mittels eines über einen Schwimmerschalter 23 gesteuerten Magnetventils 24, Trinkwasser in ein Staurohr 36 nachgespeist. Der ebenfalls an der Trinkwasserzulaufleitung 25 angeschlossene innenliegende Wärmeübertrager 26 besitzt zwei Funktionen. Erstens soll dadurch die Wassertemperatur in dem Speichertank 18 möglichst niedrig gehalten werden und, zweitens dient der Wärmeübertrager 26 zum Vorwärmen des Frischwassers, welches über eine separate Trinkwasserleitung 27 in den Heizkessel für die Warmwasseraufbereitung gelangt.

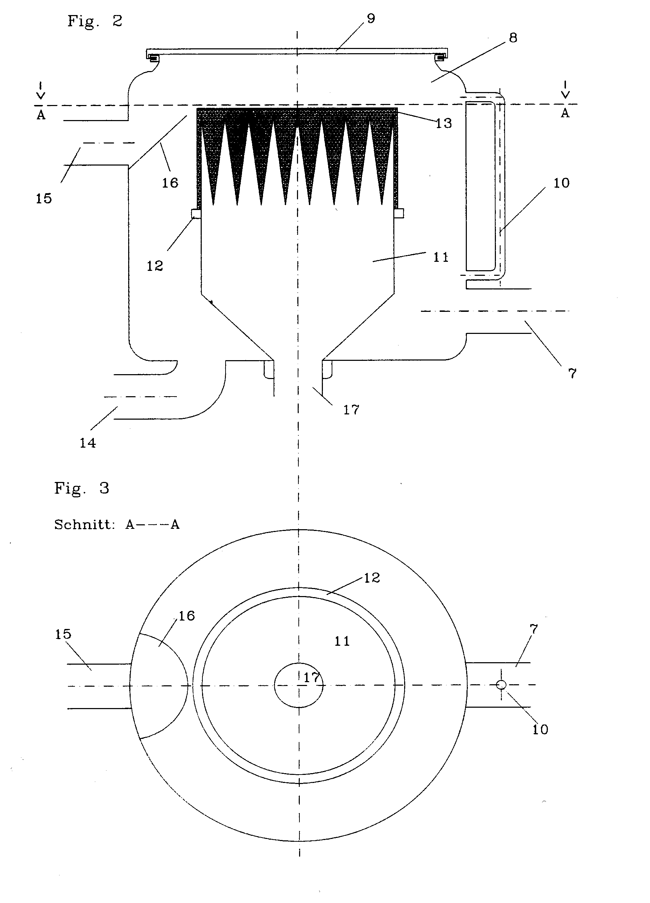

Der Aufbau des Zwischenbehälters 6 zur Vorfiltration des Brauchwassers ist in Fig. 2 und 3 vergrößert dargestellt. Der Zwischenbehälter besteht aus einem äußeren Zwischenbehälterteil 8 mit vorzugsweise verschraubbarem Deckel 9, einem außenliegendem Schau- bzw. Standglas 10, einem inneren Zwischenbehälterteil mit stegartigen Auszackungen 11 unterhalb derer ein Ring 12 fest montiert ist, auf dem ein lösbar befestigter Filter 13 in Form eines Zylinders oder einer Haube sitzt. Im Boden des äußeren Zwischenbehälterteils 8 ist eine Notablaßöffnung 14 installiert. In der Seitenwand des äußeren Zwischenbehälterteils 8 ist in Höhe des oberen Niveaus des Filters 13 eine Notüberlauföffnung 15 angebracht, die mit der Hauptabwasserleitung verbunden ist. Vor dieser Öffnung ist ein Halbzylinder 16 fest an der Zwischenbehälterwand montiert, dessen oberer Rand sich aufgleicher Höhe mit den Spitzen der stegartigen Auszackungen des inneren Zwischenbehälterteils 11 befindet. Die Querschnittsfläche des Halbzylinders 16 entspricht der der Notüberlauföffnung 15.

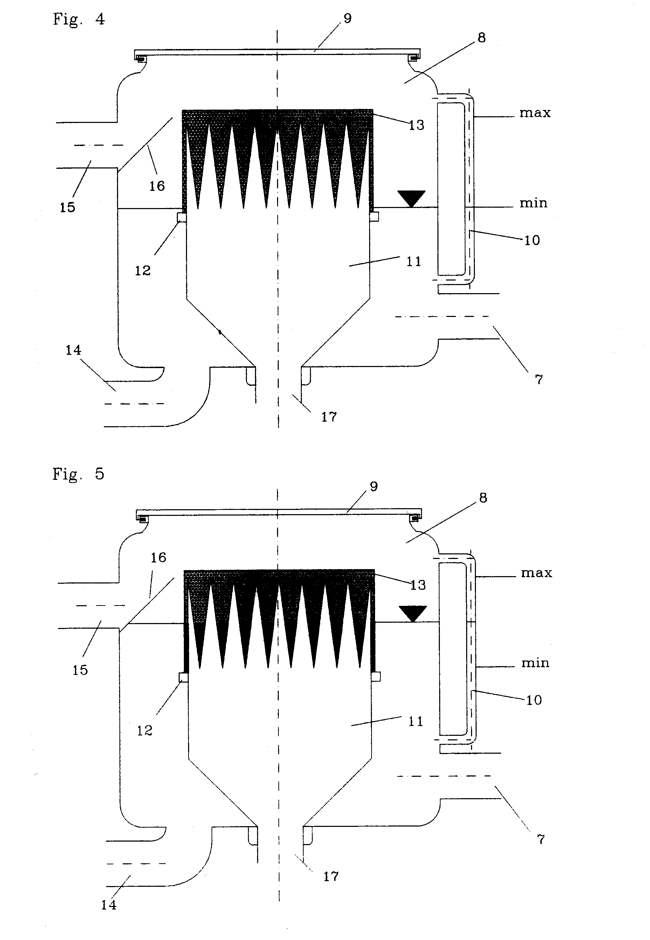

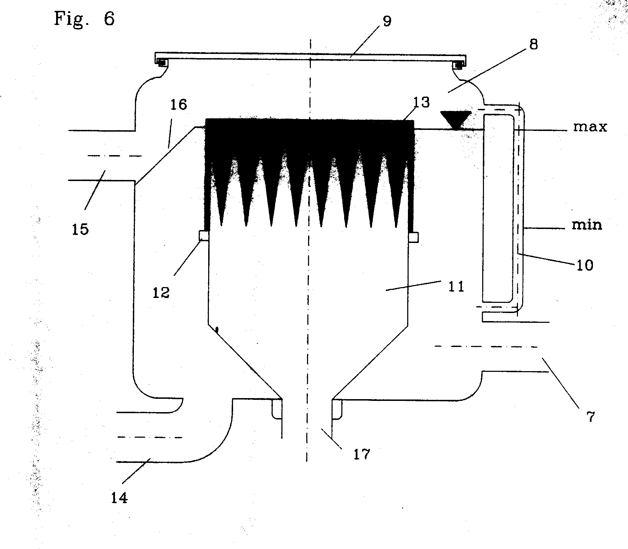

In den Fig. 4 bis 6 sind zur Erläuterung des verfahrenstechnischen Prinzips des Zwischenbehälters 6 drei Stadien der Filterzusetzung mit Verunreinigungen in zeitlich großen Abständen (vorzugsweise mehrere Monate) dargestellt.
Fig. 4 zeigt den Filtervorgang bei Einsatz eines neuen bzw. gereinigten Filters 13. Der Wasserspiegel in dem äußeren Zwischenbehälterteil 8 steigt aufgrund des Prinzips 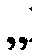 kommunizierender Röhren" bei Brauchwasserzufluß durch Zuführungsleitung 7 an. Dies geschieht bei in Betriebnahme einmalig solange, bis der Wasserstand in Höhe des unteren Niveaus der stegartigen Auszackungen des inneren Zwischenbehälterteils 11 ist. Das Brauchwasser passiert dann den Filter 13 und fließt zwischen den stegartigen Auszackungen des inneren Zwischenbehälterteils 11 hindurch in die Abführungsleitung 17 und letztlich in den Speichertank 18. Versiegt der Brauchwasserzufluß, sinkt der Wasserspiegel soweit ab, bis kein Wasser mehr zwischen den stegartigen Auszackungen des inneren Zwischenbehälterteils 11 durchfließen kann. Sollte es vorkommen, daß die Strömungsgeschwindigkeit im äußeren Zwischenbehälterteil zunimmt, d.h. sich die Brauchwasserzulaufmenge erhöht, wird dies automatisch durch die stegartigen Auszackungen des inneren Zwischenbehälterteils 11 ausgeglichen, da sich bei steigendem Wasserspiegel die durchfließbare Fläche vergrößert.
Der Schwerpunkt der Filtration sind die Haare, welche im Dusch- bzw. Badewasser mitgeführt werden. Die Haare werden von dem Filter 13 zurückgehalten und verstopfen nach und nach die Poren des Filters 13 und reduzieren somit die zu durchfließende Fläche. Dies geschieht in Höhe des Wasserspiegels. Da so das zufließende Brauchwasser nicht mehr komplett abgeführt werden kann, steigt der Wasserspiegel geringfügig an und das Brauchwasser strömt durch die höher liegenden sauberen Poren des Filters 13. So setzt sich im Laufe der Zeit der Filter nach und nach zu. Inwieweit die Zusetzung des Filter fortgeschritten ist, läßt sich von außen an dem Stand- bzw. Schauglas 10 ablesen. In Fig. 5 ist exemplarisch das Zusetzungsstadium des Filters bei etwa der Hälfte der Filterhöhe dargestellt.
Sind nach einigen Monaten die Poren des Filters 13 bis zum Maximum verstopft, muß der Filter erneuert bzw. gereinigt werden. Um Wartungsfehlern vorzubeugen, ist der Zwischenbehälter 6 mit einer Notüberlauföffung 15 versehen. Ist das Maximum erreicht, strömt das Brauchwasser über den Halbzylinder 16 in die Notüberlauföffnung 15, die mit der Hauptabwasserableitung verbunden ist. Diese Anordnung dient sowohl als Notüberlauf als auch zur Entlüftung des Systems. In Fig. 6 ist dieser maximale Zustand dargestellt.

Zur Reinigung des Filters 13 muß der Wasserspiegel im äußeren Zwischenbehälterteil bis unterhalb der stegartigen Auszackungen des inneren Zwischenbehälterteils 11 abgesenkt werden, um Verunreinigungen im Speichertank 18 zu vermeiden. Hierzu schließt man das Ventil 5, z.B. einen Kugelhahn, um das System vom Zulauf abzukoppeln. Durch Öffnen des Ventils 33, z.B. eines Kugelhahns, fließt das sich im äußeren Zwischenbehälterteil 8 befindende Brauchwasser über die Notablaßöffnung 14 in die Hauptabwasserleitung. Dadurch fällt der Wasserspiegel, der Deckel 9 kann abgenommen und der lösbar befestigte Filter 6 entnommen werden.

Die Standzeit eines Filters ist von dessen Durchmesser, dessen Höhe, von der Durchflußmenge, sowie von dem Grad der Verschmutzung des Brauchwassers abhängig. Dies bedeutet, daß man, durch Variation der geometrischen Bedingungen des Zwischenbehälters, sich theoretisch jeder Durchflußmenge und jedem Verschmutzungsgrad anpassen kann. Es ergibt sich somit die Möglichkeit die Brauchwasseranlage nicht nur in Ein- sondern auch in Mehrfamilienhäusern zu installieren.

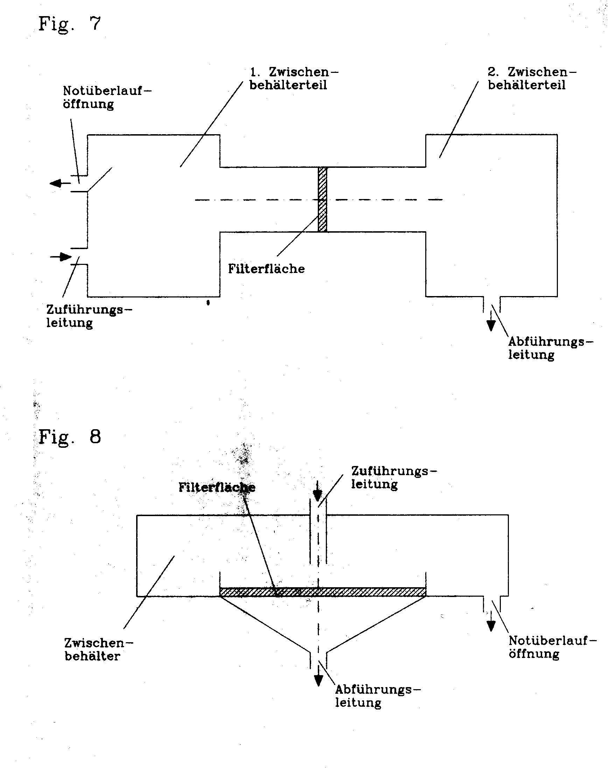

In Fig. 7 und 8 sind exemplarisch zwei theoretisch mögliche jedoch nicht bevorzugte Ausführungsformen zur Vorfiltration des Brauchwassers dargestellt. In Fig. 7 sind der erste und der zweite Zwischenbehälterteil durch eine Leitung verbunden, die von einer Filterfläche unterteilt wird. Das aufzubereitende Brauchwasser wird durch eine Zuführungsleitung dem ersten Zwischenbehälterteil zugeführt, strömt dann in den ersten Teil der Verbindungsleitung durch den Filter über den zweiten Teil der Verbindungsleitung in den zweiten Zwischenbehälterteil, von wo aus das Brauchwasser über die Abfürungsleitung in den Speichertank gelangt. In Fig.7 ist die Filterfläche vertikal zur Horizontalen angeordnet, jedoch ist eine Anordnung der Filterfläche theoretisch in jedem Winkel ϕ(0°<$ $phiv$$<180°)zur Horizontalen möglich. Eine weitere nicht bevorzugte Variation der Ausführungsform des Zwischenbehälters ist in Fig.8 dargestellt. Dabei wird das aufzubereitende Brauchwasser durch die Zuführungsleitung direkt einer beispielsweise konzentrischen Filterfläche zugeführt und gelangt nach dem Passieren des Filters sofort in die Abführungsleitung, um so dem Speichertank zugeführt zu werden. Bei dieser Ausführungsform würde die Zusetzung des Filters mit Verunreinigungen konzentrisch von innen nach außen erfolgen.

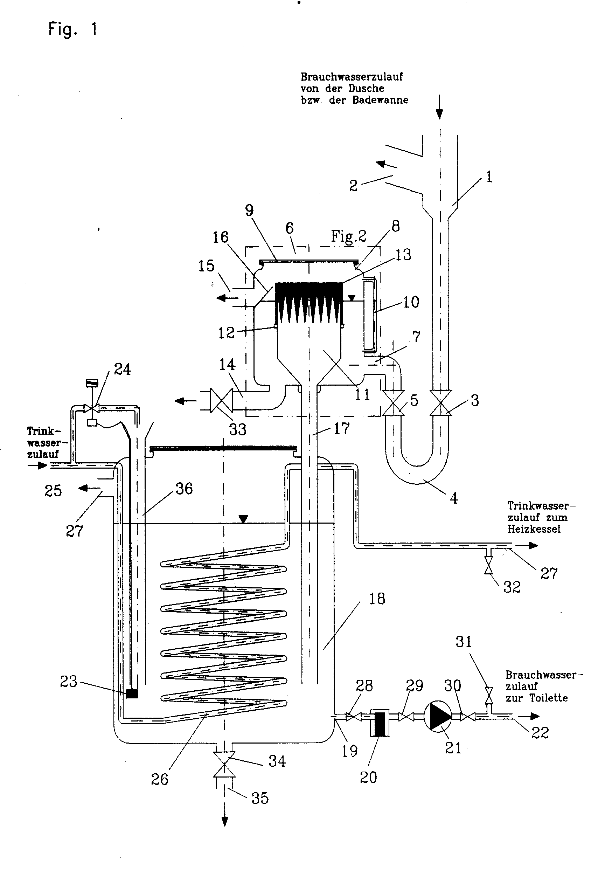

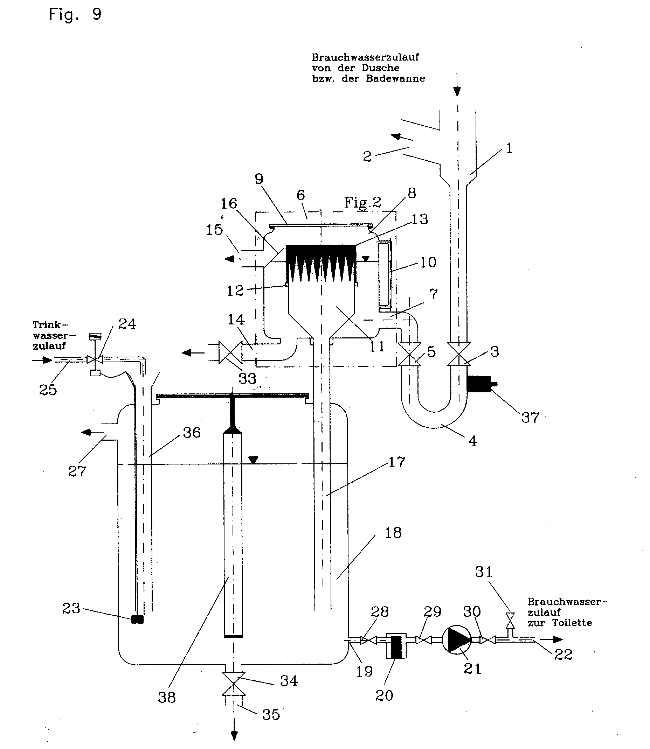

In Fig. 9 ist eine im wesentlichen im Querschnitt dargestellte mehr bevorzugte Ausführungsform einer erfindungsgemäßen Brauchwasseranlage gemäß Fig 1 dargestellt. Hierbei wird kein Wärmeübertrager 26 wie Fig. 1 eingesetzt. In Fig. 9 ist statt dessen in dem Speichertank 18 ein UV-Licht 38, vorzugsweise ein UV-Tauchstrahler, installiert. Fließt über das separate Fallrohr 1 das aufzubereitende Brauchwasser zu, so wird für eine bestimmtes Zeitintervall das UV-Licht 38, das über den Sensor 37 angesteuert wird, eingeschaltet, um das aufbereitete Brauchwasser im Speichertank 18 zu entkeimen.

### Vorteile der Brauchwasseranlage

- Reduzierung sowohl des Trinkwasserbedarfs als auch der Abwassermenge um ca. 1/3
- geringere Investitionskosten im Vergleich zu Regenwassernutzungsanlagen
- sehr geringer Platzbedarf
- Nutzungsmöglichkeit auch in Mehrfamilienhäusern
- Keine Algenwuchsproblematik aufgrund der geringen mittleren Verweilzeit des Brauchwassers im Tank, des schwach sauren Milieus durch die Waschsubstanzen und der Kühlung mittels Wärmeübertrager

### Vorteile der Filtration mittels Zwischenbehälter

- Es treten praktisch keine Druckverluste auf
- Reinigung erfolgt rein mechanisch
- Einfache Kontrollmöglichkeit des Systems
- geringer Wartungsaufwand
- Standzeit kann beeinflußt werden
- Wiederverwendbarkeit des Filters ; keine laufenden Kosten

| **Erläuterung der in den Zeichnungen beschrifteten Elemente** | | |
|---|---|---|
| | **Bezeichnung** | **Funktion** |
| **1** | Fallrohr | Verbindung zw. Dusch- bzw. Badewannenablauf und Zwischenbehälter |
| **2** | Überlaufleitung | Entlüftung bzw. Notüberlauf in die Hauptabwasserableitung |
| **3** | Ventil | zur Absperrung der Brauchwasseranlage |
| **4** | Siphon | zur Sedimentation von grobkörnigen Schmutzstoffen |
| **5** | Ventil | zur Absperrung des Zwischenbehälters zur Siphonreinigung |
| **6** | Zwischenbehälter | Vorfiltereinheit der Brauchwasseranlage |
| **7** | Zuführungsleitung | des Zwischenbehälters |
| **8** | äußerer Zwischenbehälterteil | Auffanggefäß für das zufließende Brauchwasser |
| **9** | Deckel | Schutz vor Verschmutzung |
| **10** | Schau- bzw. Standglas | zur Kontrolle des Systems |
| **11** | innerer Zwischenbehälterteil | Ablauf des aufbereiteten Brauchwassers zur Abführungsleitung |
| **12** | Ring | zur Fixierung des Filters |
| **13** | Filter | zur Filtration des aufzubereitenden Brauchwassers |
| **14** | Notablaßöffnung | Notablaß zur Hauptabwasserableitung |
| **15** | Notüberlauföffnung | Notüberlauf bzw. Entlüftung zur Hauptabwasserableitung |
| **16** | Halbzylinder | Überlauf zur Notüberlauföffnung |
| **17** | Abführungsleitung | vom Zwischenbehälter zum Speichertank |
| **18** | Steichertank | für das aufbereitete Brauchwasser |
| **19** | Entnahmeöffnung | Entnahmestelle des aufbereiteten Brauchwassers |
| **20** | Feinfilter | zum Schutz der Brauchwasserpumpe |
| **21** | Brauchwasserpumpe | zur Förderung des aufbereiteten Brauchwassers zu den Toilettenkästen |
| **22** | Steigleitung | von der Brauchwasserpumpe zu den Toilettenkästen |
| **23** | Schwimmerschalter | Trockenlaufschutz |
| **24** | Magnetventil | zur automatischen Trinkwassernachspeisung |
| **25** | Trinkwasserleitung | Versongungsleitung für Nachspeisung und Wärmeübertrager |
| **26** | Wärmübertrager | zur Kühlung bzw. Wärmewinnung |
| **27** | Trinkwasserleitung | Zulaufleitung zum Heizkessel |
| **28** | Ventil | zur Abkopplung des Feinfilters |
| **29** | Ventil | zur Abkopplung des Feinfilters bzw. der Pumpe |
| **30** | Ventil | zur Abkopplung der Brauchwasserpumpe bzw.-anlage |
| **31** | Ventil | Notanschluß |
| **32** | Ventil | Notanschluß |
| **33** | Ventil | zur Bedienung der Notablaßleitung |
| **34** | Ventil | zur Bedienung der Notablaßleitung |
| **35** | Notablaßleitung | zur Entleerung des Speichertanks |
| **36** | Staurohr | Zulaufleitung der Trinkwassernachspeisung |
| **37** | Sensor | Durchflußmelder |
| **38** | UV-Licht | Zur Entkeimung des Brauchwassers |

## Patentansprüche

1. Brauchwasseranlage, umfassend einen Zwischenbehälter (6) für die Aufbereitung des Brauchwassers, der einerseits an eine Zuführungsleitung (7) zum Zuführen des aufzubereitenden Brauchwassers und andererseits an eine Abführungsleitung (18) zum Abführen des aufbereiteten Brauchwassers angeschlossen und mit einem Filter (13) zwischen der Zuführungs- und Abführungsleitung versehen ist, dessen Filterfläche so angeordnet und bemessen ist, daß beim Zuströmen einer vorbestimmten maximalen Brauchwassermenge pro Zeiteinheit zu dem Filter nur ein Bruchteil der Filterfläche durchströmt wird.

2. Brauchwasseranlage nach Anspruch 1, dadurch gekennzeichnet, daß der Bruchteil 0,0001 bis 0,2, bevorzugt im Bereich von 0,0001 bis 0,1, ganz besonders bevorzugt im Bereich von 0,0001 bis 0,01 der Filterfläche liegt.

3. Brauchwasseranlage nach Anspruch 1 oder 2, dadurch gekennzeichnet, daß der Zwischenbehälter (6) in einen ersten und zweiten aneinandergrenzenden Zwischenbehälterteil unterteilt ist und der Filter (13) mindestens teilweise die Grenzfläche zwischen den beiden Zwischenbehälterteilen bildet.

4. Brauchwasseranlage nach Anspruch 1, 2 oder 3, dadurch gekennzeichnet, daß die Filterfläche mindestens teilweise vertikal und/oder schräg, vorzugsweise in einem Winkel von wenigstens 45° zur Horizontalen, verläuft.

5. Brauchwasseranlage nach Anspruch 4, dadurch gekennzeichnet, daß die gesamte Filterfläche vertikal und/oder schräg zur Horizontalen, vorzugsweise in einem Winkel von wenigstens 45° zur Horizontalen, verläuft.

6. Brauchwasseranlage nach Anspruch 1 bis 5, dadurch gekennzeichnet, daß der Zwischenbehälter (6) in einen äußeren Zwischenbehälterteil (8) und einem, vorzugsweise dazu korzentrischen, inneren Zwischenbehälterteil (11) unterteilt ist, wobei der innere Zwischenbehälterteil (11) mit einer oder mehreren Öffnungen zum äußeren Zwischenbehälterteil (8) hin versehen ist, die von unten beginnend wenigstens teilweise von dem Filter (13) überlagert sind.

7. Brauchwasseranlage nach Anspruch 6, dadurch gekennzeichnet, daß der Filter (13) als Filterzylinder oder -haube auf dem inneren Zwischenbehälterteil (11) aufsetzbar oder auf dem inneren Zwischenbehälterteil (11) lösbar befestigt ist.

8. Brauchwasseranlage nach Anspruch 6 oder 7, dadurch gekennzeichnet, daß die Öffnungen als Zwischenbereich zwischen stegartigen Wandteilen ausgebildet sind.

9. Brauchwasseranlage nach Anspruch 8, dadurch gekennzeichnet, daß die stegartigen Wandteile Auszackungen des oberen Randes des inneren Zwischenbehälterteils (11) sind, die sich vorzugsweise Ober wenigstens die Hälfte der Höhe des inneren Zwischenbehälterteils (11) erstrecken, wobei der nicht mit den Auszackungen versehene Bereich des inneren Zwischenbehälterteils (11) vollwandig ist und sich der Filter (6) über den gesamten mit den Auszackungen versehenen Bereich des inneren Zwischenbehälterteils (11) erstreckt.

10. Brauchwasseranlage nach Anspruch 1 bis 9, dadurch gekennzeichnet, daß eine Anzeigevorrichtung vorzugsweise ein Schau- oder Standglas (10) zum Anzeigen des Zusetzzustands des Filters (13) vorgesehen ist.

11. Brauchwasseranlage nach Anspruch 1 bis 10, dadurch gekennzeichnet, daß der Zwischenbehälter (6) mit einer nach außen, vorzugsweise zu einer Hauptabwasserableitung, führenden Notüberlauföffnung (15) in Höhe von etwa dem oberen Niveau des Filters (13) versehen ist, die gleichzeitig eine Belüftungsöffnung ist.

12. Brauchwasseranlage nach Anspruch 1 bis 11, dadurch gekennzeichnet, daß am Boden des Zwischenbehälters (6) eine Notablaßöffnung (14) nach außen, vorzugsweise zu einer Hauptabwasserableitung, angeschlossen ist.

13. Brauchwasseranlage nach Anspruch 1 bis 13, dadurch gekennzeichnet, daß die Abführungsleitung (17) zu einem Speichertank (18) geführt ist.

## Claims

1. Industrial water installation, consisting of an intermediate container (6) for the conditioning of industrial water which, on one hand, is connected to a feed pipe (7) to supply the to be conditioned industrial water and, on the other hand, to a discharge pipe (17) to drain the conditioned industrial water. The intermediate container is provided with a filter (13) between feed- and discharge pipe. The design of the filter area ensures that during in-flow of a pre-determined maximum amount of industrial water per time unit to the filter, only a fractional area of the filter is affected by the flow.

2. Industrial water installation in accordance with (1) is distinct because the fraction 0,0001 to 0,2 preferably lies in the range of 0,0001 to 0,1 of the filter area. Special preference is given to the range of 0,0001 to 0,01 of the filter area.

3. Industrial water installation in accordance with (1) or (2), is distinct because the intermediate container (6) consists of two adjoining intermediate container parts and the filter (13), at least partially, forms the border line between the two intermediate container parts.

4. Industrial water installation in accordance with (1), (2) or (3) is distinct because the filter area, at least in part, runs vertically and/or angularly, but preferably at an angle of at least 45° to the horizontal line.

5. Industrial water installation in accordance with (4) is distinct because the total filter area runs vertically and/or angularly to the horizontal line and preferably at an angle of at least 45° to the horizontal line.

6. Industrial water installation in accordance with (1) to (5) is distinct because the intermediate container (6) is sectioned into an outer intermediate container part (8) and one, preferably concentric, inner intermediate container part (11), whereby the inner intermediate container part (11) has one or several openings to the outer intermediate container part (8). Starting from the bottom they are, at least partially, covered by the filter (13).

7. Industrial water installation in accordance with (6) is, distinct because the filter (13) as a filter cylinder can be mounted or removably attached on the inner intermediate container part (11).

8. Industrial water installation in accordance with (6) or (7) is distinct because the openings, as intermediate area, are formed between tooth-like wall parts.

9. Industrial water installation in accordance with (8) is distinct because the tooth-like wall parts are indents of the upper brim of the inner intermediate container part (11) which, preferably, cover at least half of the inner intermediate container part's height. Whereby the area of the inner intermediate container part (11) without indents has a full wall and the filter (6) covers the entire with indents provided area of the inner intermediate container part (11).

10. Industrial water installation in accordance with (1) to (9) is distinct because it is planned to install an indicator, preferably a level gauge (10), for the reading of the filter's state of clogging.

11. Industrial water installation in accordance with (1) to (10) is distinct because the intermediate container (6) has an emergency over-flow opening (15) at the upper level of the filter which is a ventilation opening at the same time. The emergency over-flow opening is leading to the outside and preferably into the main sewerage.

12. Industrial water installation in accordance with (1) to (11) is distinct because at the bottom of the intermediate container (6) is an emergency drain opening (14) leading to the outside and preferably is connected to a main sewerage.

13. Industrial water installation in accordance with (1) to (12) is distinct because the discharge pipe (17) leads to a storage tank (18).

## Revendications

1. Installation pour réutilisation d'eaux sanitaires, comprenant un réservoir intermédiaire (6) pour la clarification des eaux sanitaires, relié, d'un côté, à un tuyau d'arrivée (7) destiné à amener les eaux à clarifier et, de l'autre côté, à un tuyau d'écoulement (17), destiné à évacuer les eaux clarifiées et pourvu d'un filtre (13) entre le tuyau d'arrivée et le tuyau d'écoulement, dont la surface filtrante est conçue de façon à ce que, lors de l'arrivée d'une quantité maximale d'eaux sanitaires pour un laps de temps, seulement une partie limitée de la surface totale du filtre soit utilisée.

2. Installation pour réutilisation d'eaux sanitaires, selon exigence 1, caractérisée par le fait que le rapport 0,0001 à 0,2 se situe au moins entre 0,0001 à 0,1 et de préférence entre 0,0001 à 0,01 de la surface filtrante.

3. Installation pour réutilisation d'eaux sanitaires, selon exigence 1 ou 2, caractérisée par le fait que le réservoir intermédiaire (6) est divisé en deux, la première adjacente à la deuxième, le filtre (13) constituant au moins partiellement la limite entre les deux parties du réservoir intermédiaire.

4. Installation pour réutilisation d'eaux sanitaires, selon exigences 1, 2 ou 3, caractérisée par le fait qu'au moins une partie de la surface filtrante est construite verticalement et /ou en oblique, de préférence avec un angle d'au moins 45 degrés par rapport à l'horizontale.

5. Installation pour réutilisation d'eau sanitaire, selon exigence 4, caractérisée par le fait que toute la surface filtrante est placée verticalement et/ou en oblique par rapport à horizontale, de préférence avec un angle d'au moins 45° par rapport à l'horizontale.

6. Installation pour réutilisation d'eau sanitaire, selon exigences 1 à 5, caractérisée par le fait que le réservoir intermédiaire (6) se compose d'une partie extérieure (8) et d'une partie intérieure (11), la dernière étant de préférence concentrique. La partie intérieure du réservoir intermédiaire (11) est pourvu d'une ou de plusieurs ouvertures vers la partie extérieure du réservoir intermédiaire, qui, en partant du bas, sont au moins partiellement recouvertes par le filtre (13).

7. Installation pour réutilisation d'eaux sanitaires, selon exigence 6, caractérisée par le fait que le filtre (13) peut être monté ou fixé de façon amovible en tant que cylindre filtre ou coiffe sur la partie intérieure du réservoir intermédiaire (11).

8. Installation pour réutilisation d'eaux sanitaires, selon exigences 6 ou 7, caractérisée par le fait que les ouvertures soient formées en tant que passage échelonné entre les dentelures angulaires de la paroi.

9. Installation pour réutilisation d'eaux sanitaires, selon exigence 8, caractérisée par le fait que les dentelures angulaires du bord supérieur de la partie intérieure du réservoir intermédiaire (11), s'étendent de préférence, au moins sur a moitié de la hauteur de la partie intérieure du réservoir intermédiaire (11), la partie sans dentelures de la partie intérieure du réservoir intermédiaire (11) étant massive, et que le filtre (6) s'étend sur la partie totale pourvue de dentelures de la partie intérieure du réservoir intermédiaire (11).

10. Installation pour réutilisation d'eaux sanitaires, selon exigences 1 à 9, caractérisée par le fait qu'un système d'indication est prévu, de préférence un verre indicateur ou un tube de niveau servant à indiquer l'état d'obstruction du filtre (13).

11. Installation pour réutilisation d'eaux sanitaires, selon exigences 1 à 10, caractérisée par le fait que le réservoir intermédiaire (6) est pourvu d'un trop plein (14).

12. Installation pour réutilisation d'eaux sanitaires, selon exigences 1 à 11, caractérisée par le fait qu'au fond du réservoir intermédiaire une ouverture de vidange de secours (14 )est reliée, de préférence à un écoulement principal.

13. Installation pour réutilisation d'eaux sanitaires, selon exigences 1 à 12, caractérisée par le fait qu'un tuyau d'écoulement (17) conduit à un réservoir de stockage.
